# EUROPEAN PATENT APPLICATION

(11) **EP 4 220 269 A1**
(43) Date of publication of application: **02.08.2023**
(21) Application number: 22305089.9
(22) Date of filing: 27.01.2022
(51) Int. Cl.: G02B 21/00, G02B 21/08, G02B 21/16, G02B 21/36, G02B 27/58

(54) **LIGHT IMAGING DEVICE**

(71) Applicant: Abbelight, 94230 Cachan (FR)
(72) Inventor: BOURG, Nicolas, 94230 CACHAN (FR); FOURNIER, Marie, 94230 CACHAN (FR); CAORSI, Valentina, 94230 CACHAN (FR)
(74) Representative: Atout PI Laplace

(57) **Abstract**

Light imaging device (1) adapted to analyze a sample (Ech) comprising:
- a light source (LS) adapted to emit a spatially coherent light beam (L);
- an optical relay element (OR) adapted to focus said light beam (L) in a focal plane (BFP);
- a lens system (MO) having a back focal plane (BFP) at said focal plane, said lens system being adapted to collimate said light beam, forming a collimated light beam (CL);
- a sample holder (SH) adapted to hold said sample at a sample plane (SP) such that said collimated light beam illuminated the sample, triggering an emission of a sample light (FL);
- a pixelated photodetector (Det) adapted to acquire an image of said sample light with a predetermined frame exposure time;
wherein said device also comprises, placed optically upstream of said optical relay element, on an optical path of said light beam (L) :
- a light structuring element (LSE) adapted to form, from said light beam, a plurality of sub-beams (SB1, SB2, SB3) focused in said back focal plane and interfering at the sample plane, forming an interference pattern (IF);
- a scanning element (SE) adapted to induce a plurality of controllable shifts of a position of said sub beams at said sample plane, within said frame exposure time, such that each controllable shift is identical for said sub-beams.

## Description

### Technical field:

The present invention concerns the field of light imaging device.

### Prior Art:

Single molecule localization microscopy (SMLM) is based on the delayed stochastic emission of molecules in order to achieve the emission of single fluorescent molecules. A sample containing fluorescent molecules is illuminated using an irradiance tuned in such a way that, on average, at each time there is only one active (i.e. emitting) molecule in a focal volume of an observing microscope. Images acquired by SMLM present image spots called point spread functions (PSFs), and each spot represents the image of a molecule. From a PSF, it is possible to measure the position of a molecule by determining the center of the spot using an algorithm. This position can be determined with a precision which can be much better than the diffraction-limited resolution of the microscope. This stochastic process is repeated for several tens of thousands of images to obtain a final super-resolved image with a high spatial resolution (up to 10 nm). For example, Lelek et. Al in Lelek et. al, Single-molecule localization microscopy, Nature Reviews Method Primers, vol. 1, 39, 2021, describes the basic principles of SMLM, such as the different types of molecule labeling, the determination of the position of PSFs and the process to reconstruct super-resolution images from localizations of PSFs.

Additionally, Mailfert et. al, in Mailfert et. al, A Theoretical High-Density Nanoscopy Study Leads to the Design of UNLOC, vol. 113, 3, 2018, discloses algorithms used for determining PSFs. In particular, Mailfert et. al relates to an algorithm which has been optimized to obtain higher spatial resolution for samples having a high density of fluorescent molecules. In particular, the algorithm evaluates the probability of detection and the uncertainty of localization for each fluorescent molecule so that imprecise localizations can be filtered out when reconstructing super-resolution images.

However, the high spatial resolution depends on the molecule detection which in turn depends on the density of single fluorescent molecules. In particular, the higher the density, the more difficult it is to detect and localize molecules and the lower the image quality (due to artifacts such as sample drifting and overlapping PSFs). In contrast, the lower the density of single fluorescent molecules, the higher the spatial resolution.

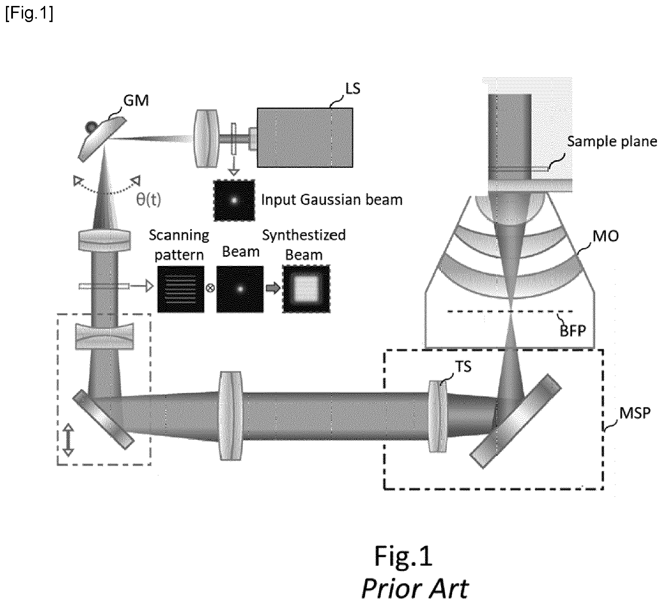

Further, most SMLM techniques use a Gaussian-shaped illumination to illuminate samples. However, Gaussian-shaped illumination provides a non-uniform excitation and limits the exploitable fields of view. Mau et al., in "Mau et al., Fast wide field scan provides tunable and uniform illumination optimizing super-resolution microscopy on large fields, Nature Communications, vol. 12, 3077, 2021", discloses a method for achieving a uniform illumination. The system is called ASTER (Adaptable Scanning for Tunable Excitation Regions) and is illustrated in figure 1. It comprises a laser source LS emitting a Gaussian light beam. The Gaussian beam is focalized on two galvanometer scanning mirrors GM to control illumination at the sample plane. The light beam is focus by a tube lens LS in a back focal plane BFP of the objective MO of a microscope MSP. While the light beam keeps its position in the back focal plane, an angle shift applied to the mirrors will induce a similar angle shift in the objective BFP and a position shift of the beam at sample plane. Fast scanning of the Gaussian beam position in defined patterns such as raster scan or an Archimedes spiral then generates an overall homogeneous illumination over the field of view when averaged over the camera frame exposure time. The system of figure 1 enables an increased precision of the determination of the center of PSFs, wider fields of view and greater efficiency compared to systems using conventional Gaussian-shaped illumination, which provide a non-uniform excitation.

The system of figure 1 provides a suitable solution for generating a uniform illumination (ie: flat-top) over a predetermined field of view.

On the other hand, a solution for providing a structured illumination technique with a homogeneous illumination over the whole field of view is still lacking. Indeed, most of the structured illumination techniques provide an illumination that is inhomogeneous due to the Gaussian nature of the initial light beam or lose too much of the power of the initial light beam (eg: enlargement of the central part of a Gaussian beam). Other homogenization methods are not compatible with some specific imaging techniques. For example, the homogenization of a beam using a multimode fiber leads to a multitude of angle of incidence of the output light beam and is not compatible with Total Internal Reflection Fluorescence (TIRF) imaging.

The invention aims to alleviate certain problems of the prior art. To this end, an object of the invention is a light imaging device similar to the device of figure 1 but additionally comprising a light structuring element adapted to form, from the illuminating light beam, a plurality of sub-beams focused in the back focal plane of the objective and interfering at the sample plane, forming an interference pattern. The device of the invention, via the light structuring element in conjunction with the scanning element provides a structured illumination that is homogeneous over a large field of view.

### Summary of the invention:

An object of the invention is a light imaging device adapted to analyze a sample comprising:
- a light source adapted to emit a spatially coherent light beam;
- an optical relay element adapted to focus the light beam in a focal plane ;
- a lens system having a back focal plane at the focal plane, the lens system being adapted to collimate the light beam, forming a collimated light beam ;
- a sample holder adapted to hold the sample at a sample plane such that the collimated light beam illuminated the sample, triggering an emission of a sample light;
- a pixelated photodetector adapted to acquire an image of the sample light with a predetermined frame exposure time;
- wherein the device also comprises, placed optically upstream of the optical relay element, on an optical path of the light beam :
- a light structuring element adapted to form, from the light beam, a plurality of sub-beams focused in the back focal plane and interfering at the sample plane, forming an interference pattern ;
- a scanning element adapted to induce a plurality of controllable shifts of a position of the sub beams at the sample plane, within the frame exposure time, such that each controllable shift is identical for the sub-beams.

According to a preferred embodiment of the invention, the plurality of controllable shift induced by the scanning element is such that an average of the sub-beams at the sample plane over the frame exposure time corresponds to the interference pattern, projected homogeneously over a predetermined field of view.

According to an embodiment of the invention, the light structuring element is a digital micromirror device or a spatial light modulator placed optically downstream after the scanning element.

Alternatively, according to another embodiment, the light the light structuring element comprises:
- a beam splitter adapted to split the light beam into the sub-beams
- an phase delay element placed in an optical path of at least one sub-beam, adapted to induce a controlled phase shift to the at least one sub-beam, thus forming a so called phase-shifted sub-beam and shifting the fringes of the interference pattern. Preferably, the phase delay element is a fiber phase-shifter connected to the optical fibers element or elements guiding the phase-shifted sub-beam.

Preferably, in this embodiment, the light structuring element also comprises a plurality of optical fiber elements, each optical fiber element being adapted to guide a respective sub-beam to a so called downstream end of the optical fiber element, wherein the downstream ends are arranged in a pupil plane of the microscope device, optically conjugated to the back focal plane. Preferably, the device comprises a double telecentric zoom in the optical path of the sub-beams, adapted to form a magnified image of the pupil plane, and wherein a controlled change of a magnification of the zoom changes a distance Δ bewteen each sub- beams at the back focal plane.

According to an embodiment, the beam splitter is adapted to split the light beam into two sub-beams.

According to another embodiment, the beam splitter is adapted to split said light beam into at least three sub-beams. Preferably, in this embodiment, at least two of the optical fiber elements each comprises:
- a primary optical fiber guiding a respective sub-beam
- a controllable fiber switch connected to the primary optical fiber
- a plurality of secondary optical fibers each with a downstream aperture arranged in the pupil plane, the controllable fiber switch being adapted to couple the respective sub-beam into one among the plurality of secondary optical fibers, called chosen fiber, wherein the downstream aperture of the chosen fiber forms the downstream end of the optical fiber element.

Preferably, the scanning element is arranged in a plane optically conjugated with the back focal plane.

According to an embodiment, the sample is fluorescent and the collimated light beam triggers an emission of a fluorescent light by the fluorophores of the sample, the fluorescent light being the sample light.

Another object of the invention is a method for analyzing a sample comprising the following steps:
- emitting a spatially coherent light beam ;
- forming, from the light beam, a plurality of sub-beams;
- focusing the sub-beams at a focus plane
- collimating the sub-beams, forming a collimated light beam;
- illuminating the sample with the collimated light-beam triggering an emission of a sample light, the sub-beams interfering at the sample plane forming an interference pattern;
- inducing a plurality of controllable shifts of a position of the sub beams at the sample plane wherein an angle between each sub-beams at the sample plane is identical for the plurality of controllable shift.
- acquiring, with a pixelated photodetector, an image of the sample light with a predetermined frame exposure time, wherein the plurality of controllable shifts are induced within the frame exposure time.

The method of the invention preferably comprises ulterior step H consisting in modifying the fringes of the interference pattern a plurality of times and for each time, repeating steps F and G, to acquire an image of the sample light associated with the modified fringes.

### Brief description of the drawings:

Other features, details and advantages of the invention will become apparent from the description made with reference to the annexed drawings, which are given as examples and which represent, respectively:
The Figure 1, a ASTER device according to the prior art,
The Figure 2A, a light imaging device according to a first embodiment of the invention
The Figure 2B, a light imaging device according to a second embodiment of the invention
The Figure 3A, a device according to an embodiment of the invention,
The Figure 3B, a front view (top) and a side view (bottom) of the pupil plane of the device according to an embodiment of the invention,
The Figure 3C, the arrangement of the sub-beams at the back focal plane and the interference pattern at the sample plane in the device according to an embodiment of the invention,
The Figure 3D, the steps of scan that are necessary to cover the whole field of view in the device according to an embodiment of the invention,
The Figure 4A, a device according to an embodiment of the invention,
The Figure 4B, the arrangement of the sub-beams at the back focal plane and the interference pattern at the sample plane in the device according to an embodiment of the invention,
The Figure 4C, the steps of scan that are necessary to cover the whole field of view in the device according to an embodiment of the invention,
The Figure 5, a device according to an embodiment of the invention,
The Figure 6, a method according to the invention,

In the drawings, unless otherwise indicated, the elements are not to scale.

### Detailed specification:

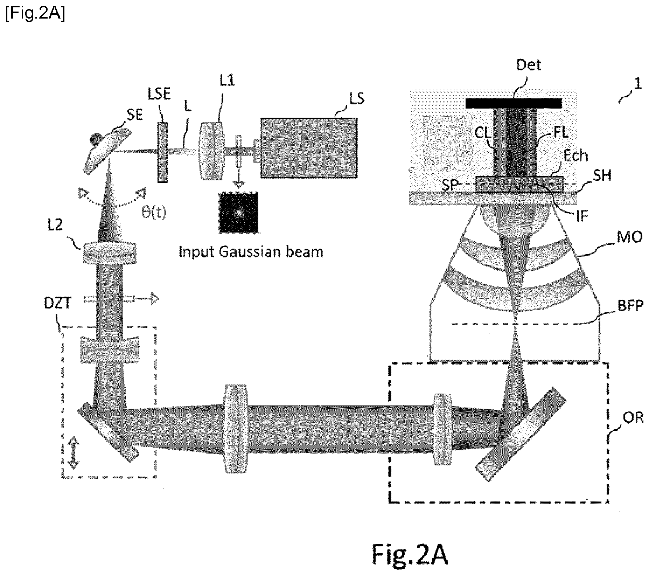

Figure 2A illustrates a light imaging device 1 according to a first embodiment of the invention, adapted to analyze a sample Ech. This device 1 is an evolution of the prior art device of figure 1 (ASTER device). Thus, like the ASTER device of figure 1, the device 1 of the invention comprises a light source LS adapted to emit a spatially coherent light beam L. The light source is typically a laser that emits the light beam L with a wavelength which corresponds to the excitation wavelength of the fluorophores used to label the molecules comprised in the sample. According to a preferred embodiment, the light beam L has a Gaussian-shaped illumination profile to simplify the scan necessary to achieve a homogeneous structured illumination (see further).

Further, the device 1 comprises an optical system which comprises an optical relay element OR and lens system MO with a back focal plane BFP comprising at least one lens. The optical relay element OR, typically a tube lens, is adapted to focus the light beam L in the back focal plane BFP of the lens system MO such that the lens system MO collimates the light beam, forming a collimated light beam CL. In a preferred embodiment, the microscope is an inverted microscope.

A sample holder SH, typically a coverslip, is adapted to hold the sample Ech at a sample plane SP such that the collimated light beam illuminates the sample. The sample then re-emits a sample light FL. Depending on the nature of sample imaged, the sample light FL can be different. According to a first embodiment, the sample is fluorescent and the collimated light beam triggers an emission of a fluorescent light FL (corresponding to the sample light) by the fluorophores of the sample. In the first embodiment, the lens system is a microscope objective. According to a second embodiment, the sample partially reflects or backscatters the collimated light beam, forming the sample light FL. In the second embodiment, the device 1 is adapted to characterize the surface of the sample for example.

For simplification, we will describe the rest of the specification according to the first embodiment of the invention. However, one skilled in the art will understand that the characteristics described hereinafter are also comprised in the second embodiment of the invention.

A pixelated photodetector Det is adapted to acquire an image of the fluorescent light with a predetermined frame exposure time. As an example illustrated in figure 2A, the photodetector Det in placed optically downstream of the sample holder with respect to the light beam L. In another embodiment, the photodetector Det, is placed such that the fluorescent light is collected via the inverted objective MO and collimated by the optical relay element OR. In this embodiment, the separation between the light beam L and the fluorescent light is made via a dichroic mirror for example.

Further, the device 1 comprises a scanning element SE, typically two galvanometer scanning mirrors, placed in a plane optically conjugated with the back focal plane BFP of the objective MO. To achieve this optical conjugation, as an example, the device 1 comprises a first lens L1 focusing the light beam exiting the light source LS, on the plane of the scanning element and a second lens L2 collimating the light beam exiting the scanning element. Other configurations obvious to one skilled in art to conjugate the plane of the back focal plane BFP to the plane of the scanning element can be implemented. As explained before, an angle shift applied to the galvanometer scanning mirrors SE induces a similar angle shift in the back focal plane BFP of the objective MO and a position shift of the light beam L at the sample plane SP.

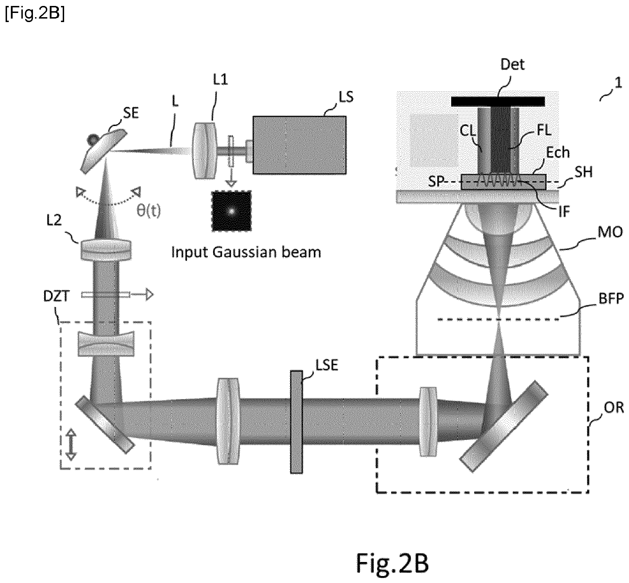

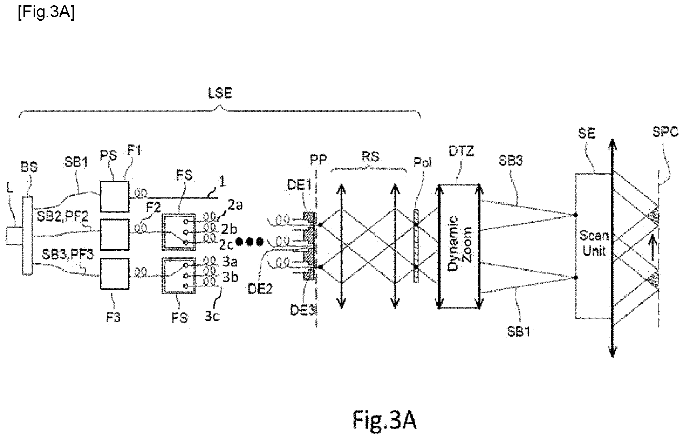

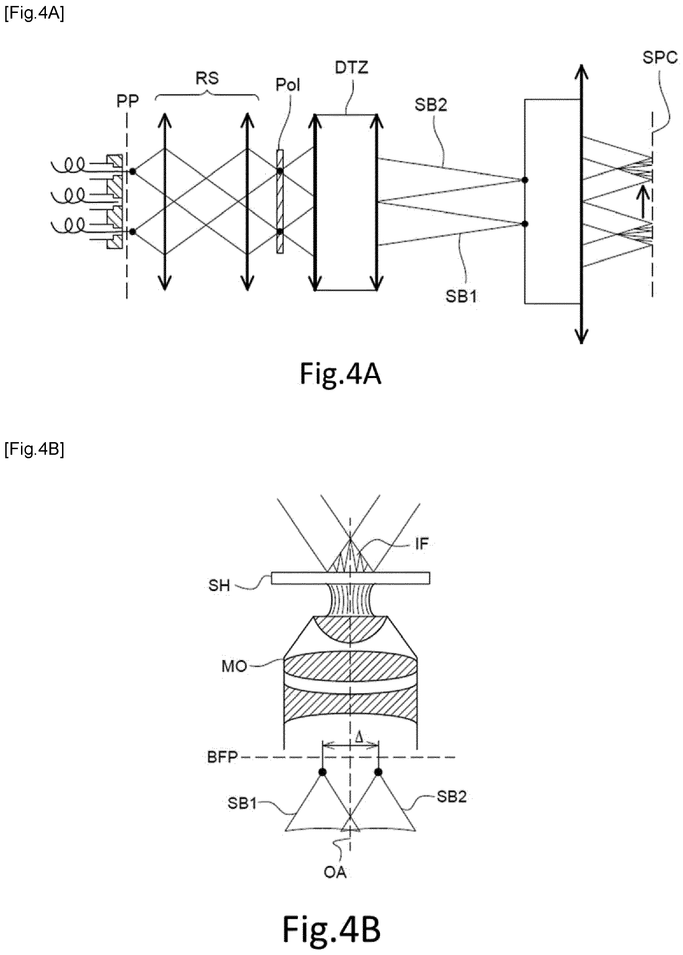

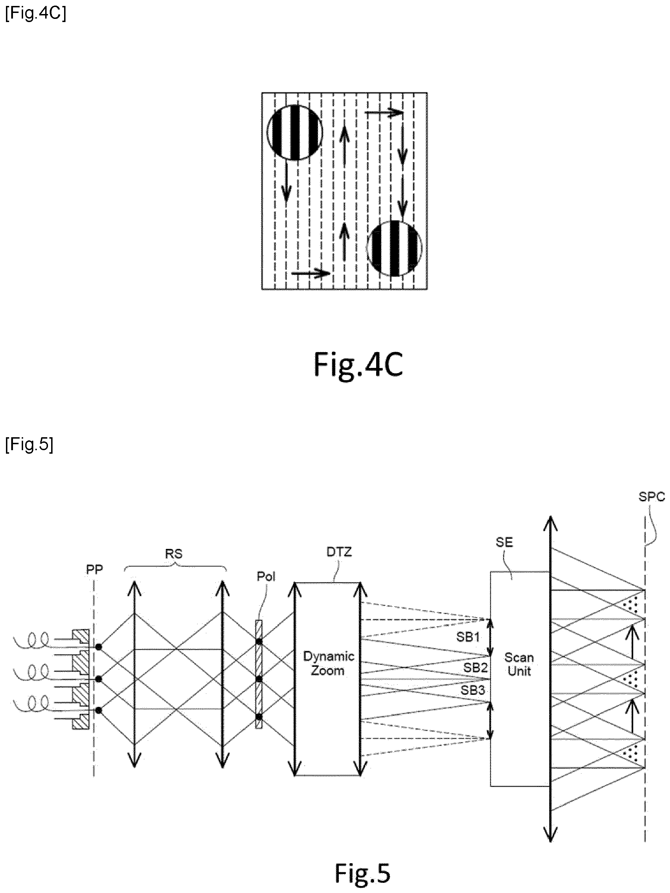

As a difference with respect to the ASTER device of figure 1, the device of the invention comprises a light structuring element LSE placed optically upstream of the optical relay element OR, it is adapted to form, from the light beam L, a plurality of sub-beams SB1, SB2, SB3 focused in the back focal plane BFP. These sub-beams are not represented in figure 2A, but are visible in figures 3A, 3C, 4A, 4B or 5 for example. In an embodiment, the light structuring element is designed to split the light beam L into at least two sub beams (see e.g. figures 3A, 4A). In another embodiment, the light structuring element is designed to split the light beam L into more than two sub beams (e.g. three, see figure 5). These sub-beams interfere at the sample plane SP, forming an interference pattern IF at this plane SP. In the first embodiment of the invention, the light structuring element LSE is placed optically upstream of the scanning element SE. In the second embodiment of the invention, illustrated in figure 2B, the light structuring element is placed optically downstream of the scanning element SE.

Given the presence of the light structuring element, the scanning element SE is adapted to induce a plurality of controllable tilts of the sub-beams at the back focal plane BFP and therefore a plurality of shifts of a position of the sub beams at the sample plane, within the frame exposure time of the photodetector Det. The light structuring element LSE is designed to produce a specific and controlled interference pattern IF at the sample plane SP.

Critically, the scanning element SE tilts the sub-beams and induces an identical angle shift for the sub-beams and the back focal plane BFP and an identical position shift at the sample plane for the sub-beams. Thus, a tilt by the scanning element does not change an angle between each sub-beam at the sample plane SP. This implies that a shift of position of the sub-beams at the sample plane SP will not modify the fringes of the interference pattern IF, and leads a to an identical structured illumination that shifts over the whole field of view at the sample plane SP. Therefore, via the scanning element, the sub-beams scan the whole field of view or a portion of this field of view called predetermined field of view, within the frame exposure time of the photodetector Det. This scan gives rise to a temporally averaged excitation profile at the sample plane. This averaged excitation profile corresponds to the interference pattern projected homogeneously over the field of view of the device, defined by the X-Y areas scanned by the sub-beams, via the scanning element. The scan induced by the scanning element SE is typically a raster scan or an Archimedes spiral, or any type of scan know to one skilled in the art to provide an overall homogeneous structured illumination.

The device 1 of the invention provides an elegant solution to generate a homogeneous structured illumination over a large field of view.

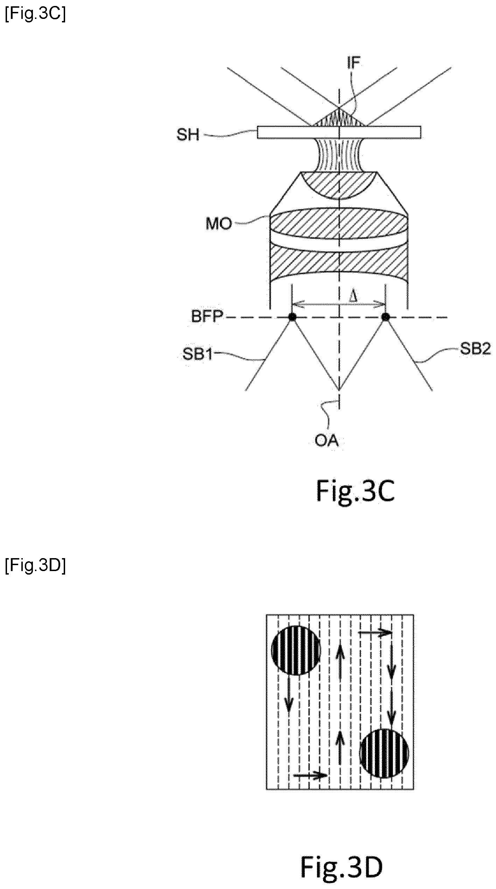

In the illustration of figure 2A, the device 1 comprises multiple optional mirrors for practicability and compactness of the system. Further the device comprises an optional double telecentric zoom DTZ in the optical path the light-beam L adapted to change the diameter of the light beam L via the magnification of the zoom DTZ. More precisely, given the presence of the light structuring element, a controlled change of a magnification of the zoom DTZ changes a distance Δ bewteen each sub- beams at the back focal plane and thus changes the interfringe distance of the interference pattern at the sample plane (see further figures 3C or 5).

Figure 3A illustrates a preferred embodiment of the device 1 of the invention. In this preferred embodiment, the light structuring element LSE comprises a beam splitter BS adapted to split said light beam into the sub-beams. As a non-limiting example, the beam splitter is formed by two opposed half prisms. Further, the light structuring element LSE comprises a phase delay element PS placed in an optical path of at least one sub-beam. This phase delay element PS is adapted to induce a controlled phase shift to at least one sub-beam, hereinafter shifted sub-beam, thus shifting the fringes of the interference pattern. As a non-limiting example, the phase delay element PS is a fiber stretcher, a piezoelectric element an electro-optic modulator or an acousto-optic modulator shifting the phase of the shifted sub-beam or sub-beams by a controllable amount. A shift in the phase of the shifted sub-beam will only shift the fringes of the interference pattern IF at the sample plane, and not the structure of the interference pattern itself. In the invention, the phase delay element PS does not shift the fringes of the interference pattern before the homogenization of the structured illumination is achieved. In other words, we scan the sub-beams over the predetermined field of view with a predetermined interference pattern with fixed fringes, then we shift the fringes of the interference pattern and we repeat the scan. This can be repeated several times. This allows the illumination of different areas of the sample and therefore the excitation of different fluorophores of the sample. As a non-limiting example, in the preferred embodiment illustrated in figure 3A, the device 1 comprises a phase delay element PS for each sub-beam.

Preferably, in the embodiment of figure 3A, the light structuring element further comprises a plurality of optical fiber elements F1, F2, F3. These optical fiber elements F1, F2, F3 are adapted to guide a respective sub-beam SB1, SB2, SB3 to a so called downstream end DE1, DE2, DE3 of the optical fiber element. To ensure that each sub beam is focused at the back focal plane BFP, the downstream ends are arranged in a pupil plane PP of the device 1, optically conjugated to the back focal plane BFP. In the embodiment of figure 3A, preferably, the phase delay element is a fiber phase-shifter connected to each optical fibers element guiding a phase-shifted sub-beam. This embodiment allows for a simpler control of the interference pattern IF at the sample plane and a more robust architecture.

Preferably, in the embodiment of figure 3A, the fiber elements F2 and F3 each comprise:
- a primary optical fiber PF2, PF3 guiding a respective sub-beam SB2, SB3
- a controllable fiber switch FS connected to the primary optical fiber
- a plurality of secondary optical fibers 2a, 2b, 2c; 3a, 3b, 3c each with a downstream aperture arranged in the pupil plane PP.

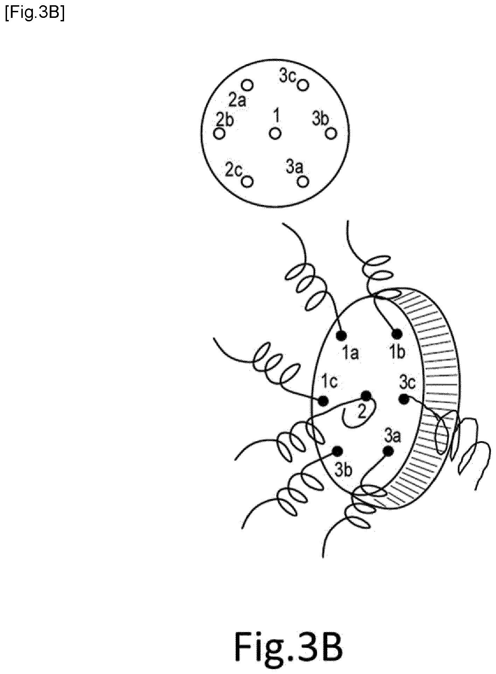

In the embodiment of figure 3A, the controllable fiber switches FS are adapted to couple the respective sub-beam into one of the secondary optical fibers, called chosen fiber. Thus, the downstream aperture of the chosen fiber forms the downstream end of the optical fiber element. The downstream apertures are arranged in a predetermined position in the pupil plane. Figure 3B illustrates schematically a front view (top) and a side view (bottom) of the pupil plane PP comprising the downstream apertures of the secondary optical fibers 2a, 2b, 2c; 3a, 3b, 3c and the downstream end of the optical fiber elements F1. This illustration is given as an example, and other configurations of the downstream apertures can be chosen in the invention.

Thanks to the controllable fiber switches FS and the plurality of secondary optical fibers, one can freely chose different arrangement of the sub-beams in the vertical and horizontal axis the pupil plane PP and therefore in the back focal plane BFP. This means that, the controllable fiber switches FS, one can easily modify the interference pattern IF at the sample plane SP. The fiber switches can also "block" a chosen sub-beam or a plurality of sub-beams to modify the number of sub-beams that are focused at the back focal plane BFP. This will also modify the interference pattern IF at the sample plane SP. Because this configuration uses an array of optical fibers, it is also more robust and less susceptible to misalignment.

In the embodiment of figure 3A, the device 1 comprises an optional optical system RS which is a double telecentric system of magnification -1 in this example. This system RS forms and inverted image of the pupil plane PP at a secondary image plane. Thanks to a polarizer Pol, placed at the secondary image plane, one can polarize the sub-beams into a predetermined orientation before they pass any other optical component of the device 1.

Further, the device of the embodiment of figure 3A comprises the optional and aforementioned double telecentric zoom DTZ in the optical path the sub-beams. In the embodiment of figure 3A, the zoom DTZ forms a magnified image of the pupil plane PP, relayed by the system RS, onto the scanning element SE (e.g.: the galvanometer mirrors). Thus, the zoom DTZ is adapted to change, via the control of the magnification, a distance Δ bewteen each sub- beams at the back focal plane BFP. The scanning element SE reflects or transmits the sub-beams exiting the zoom DTZ, such that they interfere at a plane optically conjugated to the sample plane, called sample plane conjugated SPC, and form the interference pattern IF at that plane SPC. This sample plane conjugated SPC is imaged via a plurality of lenses and/or mirrors at the sample plane SP. As illustrated by the arrow in figure 3A, the scanning element SE is adapted to shift the position of the sub-beams at the plane SPC (and thus at the sample plane SP) and scan over the whole field of view to produce a temporally averaged structured homogeneous illumination.

Alternatively, in another embodiment, the scanning element SE is placed optically upstream of the zoom DTZ. However, the configuration illustrated in figure 3A, in which the scanning element SE is placed optically downstream of the zoom DTZ is preferred to prevent that a portion of the sub-beams are not collected by the lenses of the zoom, because of the tilt of the galvanometer mirrors for example.

The figures 3A, 3C and 3D illustrates respectively the optical path of the sub-beams, their position at the back focal plane BFP and their interference pattern at the sample plane SP, in an embodiment of the invention in which the distance Δ between the two sub-beams SB1, SB2 at the back focal plane is relatively large (ie: a large magnification of the zoom DTZ). Likewise, the figures 4A, 4B and 4C illustrate the same elements as figures 3A, 3C and 3D respectively, but in an embodiment of the invention with a relatively small distance Δ (ie: a small magnification of the zoom DTZ), and thus a large interfringe distance.

More specifically, figure 3C and figure 4B illustrate schematically the arrangement of the sub-beams at the back focal plane BFP and the interference pattern IF at the sample plane SP.

Due to the relatively large distance Δ, in the embodiment of figure 3C, the interference pattern IF at the sample plane SP has a diffraction-limited interfringe distance and the area of the illumination is relatively small. Because, the distance Δ is relatively smaller in the embodiment of figure 4B, the interfringe distance of the interference pattern IF is relatively larger (ie: not diffraction limited) and the area of the illumination is relatively bigger. In both embodiments, if the light beam has a Gaussian intensity profile, the fringes of the interference pattern have a Gaussian envelope.

Figure 3D and 4C illustrate schematically, by arrows drawn over the field of view of the device, the steps of scan that are necessary to cover the whole field of view within the frame exposure time and achieve a temporally averaged homogeneous structured illumination. Given the smaller area of illumination, in the embodiment of figure 3A, 3C and 3D, the number of steps necessary to cover the whole field of view is greater than the number of steps in the embodiment of 4A, 4B and 4C.

Thus, the embodiment of figures 4A, 4B and 4C allows for a faster scan of the field of view, whereas the embodiment of figures 3A, 3C and 3D allows for a smaller fringes and thus leads to a higher spatial resolution in structured illumination imaging.

Figure 5 schematically illustrates a variant of the preferred embodiment of figure 3A, wherein the fiber switch FS transmits three sub-beams at the pupil plane PP. In this embodiment, the interference pattern at the plan SPC and at the sample plane is an array of spots. This embodiment can be of interest to realize depth confocal microscopy using a structured multispot illumination . The effect of the magnification of the zoom DTZ is illustrated in figure 5. The dashed sub-beams SB1, SB3 represent the position of the sub-beams under a greater magnification of the zoom DTZ than the solid sub-beams SB1, SB3, ie with a distance Δ more important. The change of magnification will change the interference pattern IF The arrows drawn near the plane SPC represent the displacement of the sub-beams induced by the scanning element SE used for homogenization of the structured illumination over the predetermined field of view.

In another embodiment of the invention, different from the one illustrated in figure 3A, the light structuring element is a digital micro mirror device or a spatial light modulator placed optically downstream after the scanning element.

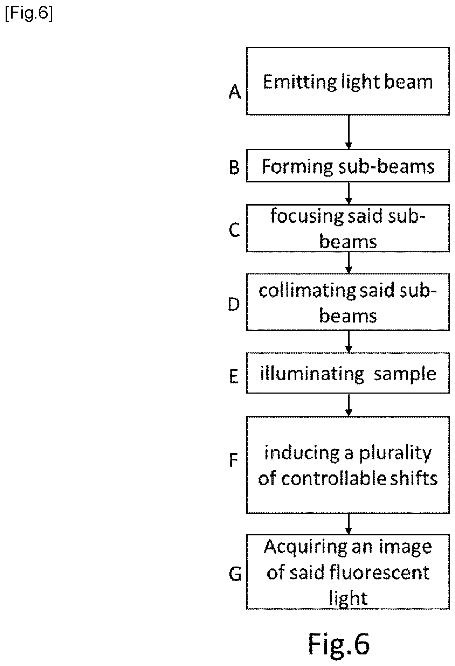

Figure 6 illustrates a method for analyzing a sample, according to the invention. This method is adapted to be implemented by the device 1 of the invention. It comprises a first step 1 consisting in emitting the spatially coherent light beam L. This step is realized by the laser source LS. Then, in step B, the light structuring element LSE forms the plurality of sub-beams SB1, SB2, SB3, from the light beam. Then, in step C, the optical relay element OR focuses the sub-beams at the back focal plane. In step D, the microscope objective MO collimates the sub-beams, forming the collimated light beam CL. In step E, the collimated light-beam illuminates the sample and triggers the emission of a sample light FL, wherein the sub-beams interfere at the sample plane and forms the interference pattern IF. Then, in step F, the scanning element SE induces a plurality of controllable shifts of a position of the sub beams at the sample plane. In this step F, an angle between each sub-beam at the sample plane is identical for the plurality of controllable shift. In the final step G of the method of figure 6, the pixelated photodetector Det acquires an image of the sample light with a predetermined frame exposure time. In step F, the controllable shifts are induced within said frame exposure time. As previously explained, step B can be done before or after step F can be done in a different order, but both are necessarily done between steps A and steps G.

The method of the invention provides an elegant solution to generate a homogeneous structured illumination over a large field of view.

According to a preferred embodiment, the method of the invention comprises ulterior step H consisting in modifying the fringes of the interference pattern IF a plurality of times and for each time, repeating the steps F and G, to acquire an image of said sample light associated with the modified fringes.

## Claims

1. Light imaging device (1) adapted to analyze a sample (Ech) comprising:
- a light source (LS) adapted to emit a spatially coherent light beam (L);
- an optical relay element (OR) adapted to focus said light beam (L) in a focal plane (BFP);
- a lens system (MO) having a back focal plane (BFP) at said focal plane, said lens system being adapted to collimate said light beam, forming a collimated light beam (CL);
- a sample holder (SH) adapted to hold said sample at a sample plane (SP) such that said collimated light beam illuminated the sample, triggering an emission of a sample light (FL);
- a pixelated photodetector (Det) adapted to acquire an image of said sample light with a predetermined frame exposure time;
wherein said device also comprises, placed optically upstream of said optical relay element, on an optical path of said light beam (L) :
- a light structuring element (LSE) adapted to form, from said light beam, a plurality of sub-beams (SB1, SB2, SB3) focused in said back focal plane and interfering at the sample plane, forming an interference pattern (IF);
- a scanning element (SE) adapted to induce a plurality of controllable shifts of a position of said sub beams at said sample plane, within said frame exposure time, such that each controllable shift is identical for said sub-beams.

2. Light imaging device according to claim 1, in which said plurality of controllable shift induced by the scanning element is such that an average of said sub-beams at the sample plane over said frame exposure time corresponds to said interference pattern, projected homogeneously over a predetermined field of view.

3. Light imaging device according to any of the claims 1 to 2, wherein said light structuring element is a digital micromirror device or a spatial light modulator placed optically downstream after said scanning element.

4. Light imaging device according to claim 2, wherein said light said light structuring element comprises:
- a beam splitter (BS) adapted to split said light beam into said sub-beams (SB1, SB2, SB3),
- an phase delay element (PS) placed in an optical path of at least one sub-beam, adapted to induce a controlled phase shift to said at least one sub-beam, thus forming a so called phase-shifted sub-beam and shifting the fringes of said interference pattern.

5. Light imaging device according to the preceding claim, wherein said light structuring element also comprises a plurality of optical fiber elements (F1, F2, F3), each optical fiber element being adapted to guide a respective sub-beam to a so called downstream end (DE1, DE2, DE3) of said optical fiber element, wherein the downstream ends are arranged in a pupil plane (PP) of said microscope device, optically conjugated to said back focal plane.

6. Light imaging device according to the preceding claim, comprising a double telecentric zoom (DTZ) in the optical path of said sub-beams, adapted to form a magnified image of said pupil plane, and wherein a controlled change of a magnification of said zoom changes a distance Δ bewteen each sub- beams at said back focal plane.

7. Light imaging device according to any of the claim 4 to 6, wherein said phase delay element is a fiber phase-shifter connected to the optical fibers element or elements guiding said phase-shifted sub-beam.

8. Light imaging device according to any of the claim 4 to 7, wherein said beam splitter is adapted to split said light beam into two sub-beams.

9. Light imaging device according to any of the claim 4 to 7, wherein said beam splitter is adapted to split said light beam into at least three sub-beams

10. Light imaging device according to the preceding claim, wherein at least two of the optical fiber elements each comprises:
- a primary optical fiber (PF2, PF3) guiding a respective sub-beam
- a controllable fiber switch (FS) connected to the primary optical fiber
- a plurality of secondary optical fibers (2a, 2b, 2c; 3a, 3b, 3c) each with a downstream aperture arranged in said pupil plane, said controllable fiber switch being adapted to couple said respective sub-beam into one among said plurality of secondary optical fibers, called chosen fiber, wherein the downstream aperture of said chosen fiber forms said downstream end of the optical fiber element.

11. Light imaging device according to any of the preceding claims, wherein the scanning element (SE) is arranged in a plane optically conjugated with said back focal plane (BFP).

12. Light imaging device according to any of the preceding claims, wherein the sample is fluorescent and the collimated light beam triggers an emission of a fluorescent light by the fluorophores of the sample, said fluorescent light being said sample light.

13. Method for analyzing a sample comprising the following steps:
A. emitting a spatially coherent light beam ;
B. forming, from said light beam, a plurality of sub-beams;
C. focusing said sub-beams (L) at a focus plane
D. collimating said sub-beams, forming a collimated light beam (CL);
E. illuminating said sample with said collimated light-beam triggering an emission of a sample light (FL), said sub-beams interfering at the sample plane forming an interference pattern;
F. inducing a plurality of controllable shifts of a position of said sub beams at said sample plane wherein an angle between each sub-beams at said sample plane is identical for said plurality of controllable shift.
G. acquiring, with a pixelated photodetector, an image of said sample light with a predetermined frame exposure time, wherein said plurality of controllable shifts are induced within said frame exposure time.

14. Method according to the preceding claim, comprising ulterior step H consisting in modifying the fringes of said interference pattern a plurality of times and for each time, repeating steps F and G, to acquire an image of said sample light associated with the modified fringes.
